# EUROPEAN PATENT SPECIFICATION

(11) **EP 2 147 621 B1**
(45) Date of publication and mention of the grant of the patent: **06.07.2011**
(21) Application number: 09165954.0
(22) Date of filing: 21.07.2009
(51) Int. Cl.: A47J 31/54, A47J 31/46

(54) **An apparatus for the preparation of coffee-based beverages from pre-packaged pods or capsules**
Vorrichtung zur Lieferung von Heißwasser an ein Pottbrühgerät zur Zubereitung von Getränken auf Kaffeebasis
Appareil de fourniture d'eau chaude à un dispositif d'infusion pour la préparation de boissons à base de café

(30) Priority: 24.07.2008 EP 08425499
(43) Date of publication of application: 27.01.2010
(73) Proprietor: Gruppo Cimbali S.p.A., 20082 Binasco (MI) (IT)
(72) Inventor: Villa, Ettore, 20082, Binasco (MI) (IT); Maturo, Giuseppe, 20082, Binasco (MI) (IT)
(74) Representative: Acco, Stefania

(56) References cited:
- EP-A- 1 074 210
- EP-A- 1 584 273
- EP-A- 1 882 433

## Description

The present invention relates to an apparatus for supplying hot water to a brewing device operating with pre-packaged pods or capsules containing one or more doses of ground coffee for the preparation of coffee-based beverages, the brewing device being provided with a chamber which can be opened and closed in which the pod or capsule is disposed and with a discharge duct from the chamber for the supply of the prepared beverage.

An example of a coffee machine using a brewing device in which doses of ground coffee pre-packaged in pods or capsules are disposed is disclosed in WO 2002/058523.

Typically, the brewing devices are installed in apparatus provided with devices able to heat the brewing water and force it to pass through the pod or capsule to produce the finished beverage.

In order to make use, in the case of pod or capsule brewers as well, of the energy advantages resulting from the use of the steam boilers which are normally used in espresso coffee machines, often coffee machines also supply hot water for the preparation of infusions such as tea or camomile, and the steam for heating and possibly frothing milk, in addition to preparing coffee.

Patent application No. WO 98/047418 describes a method for transforming an espresso-coffee machine maker operating in vertical extraction either with a ground coffee filter, or with ground coffee packs such as pre-measured tablets, the tablets being used in a horizontal plane, into an espresso-coffee maker which operates in horizontal extraction with pre-measured tablets, the tablets being used in a vertical plane.

In coffee machines with ground coffee filters, it can be desirable to keep the dispensing device pre-heated and for that purpose circulatory systems of thermosiphon type have been devised.

Patent application No. EP 1584273 discloses a device for the temperature control of a dispenser group that is applicable to a machine for preparing coffee with a boiler fitted with some means of heating for heating the water inside, at least one heater pipe in the form of a heat exchanger inside the said boiler, a cold water feed line coming from a water supply source at a preset pressure connected to the said heater pipe, a pipe connected at one of its ends to an outlet of the said heater pipe, and at the other end to an inlet of the same, with at least part of the said pipe extending through a body of a dispenser group to heat the same by means thermosiphon circulation by the hot water from the heater pipe, with the said dispenser group body including an electro-valve that is connected so that it derives a flow of hot water from the pipe to at least one hot water outlet for the preparation of coffee.

Patent application No. EP 1074210 describes an espresso coffee machine comprising a dispensing device associated with a fluid circuit and means for heating the water contained in the said fluid circuit, wherein the machine comprises controllable means for regulating the flow in the said fluid circuit in order to allow the water to be conveyed to the said dispensing device at a given temperature.

With regard to coffee machines provided with a pod or capsule brewer, the Applicant has observed that such machines may suffer from the drawback that the brewing device is not able to supply coffee at the correct temperature after long pauses between one brewing operation and the next because of the resulting cooling and because it is difficult to make the pod or capsule brewer mounted on the boiler, from which it could obtain the required heating.

A further drawback lies in the fact that the pod or capsule brewer has to be located in the machine in a way which takes account the ergonomics of the operation to introduce the pod or capsule and the ease of removal of the spent pod or capsule, which also makes it necessary to provide and dispose a collection recipient on the machine.

The Applicant has observed that in a coffee machine for pre-packaged ground coffee, such as pods or capsules, provision of a circulation system of thermo-siphon type for keeping the temperature of both the distribution and the brewing device would significantly increase the complexity of the apparatus (e.g. by increasing the number of valves within the apparatus), also due the presence of moving parts that allow the opening and closing of the brewing chamber for housing the pre-packaged ground coffee.

An object of the present invention is to provide an apparatus for supplying hot water to a brewing device operating with pre-packaged pods or capsules containing one or more doses of ground coffee for the preparation of coffee-based beverages in which the water maintains its temperature conditions even after long intervals of inactivity, thereby obviating the drawbacks discussed above.

The Applicant has understood that brewing devices for coffee preparation from pods or capsules can be realised with a relatively small thermal mass and, if hot water is supplied to the brewing chamber at a suitable temperature, e.g., selected within the range from 80°C to 90°C, brewing can be carried out at a suitable brewing temperature, thereby ensuring the dispensing of a coffee with good quality.

It has been found that by providing an apparatus for preparation of coffee-based beverages from pre-packaged pods or capsules with a brewing unit and a separate distribution unit and by providing a thermo-siphon circulation system of water through the distribution unit, it is possible to maintain the water supplied to the brewing chamber of the brewing unit at a desired temperature while keeping complexity and costs of the coffee apparatus relatively low.

Advantageously, provision of a distribution unit and a separate brewing unit makes more straightforward to arrange the brewing unit within the coffee apparatus in a position such that the location of the one or more discharge spouts bear an ergonomic advantage.

The above object is achieved by an apparatus according to claim 1.

The invention will be described in detail below with reference to the embodiments thereof, given purely by way of non-limiting example, described in the following and illustrated in the accompanying drawings, in which:
Fig. 1 is a diagram of an apparatus according to an embodiment of the invention, in an inactive position with the pod brewer open and awaiting the introduction of a pod or capsule.
Fig. 2 is a diagram of the apparatus of Fig. 1 in the brewing position for a dose of coffee.
Fig. 3 is a diagram of an apparatus, in a closed brewing position, provided with two pod brewers, according to another embodiment of the present invention.

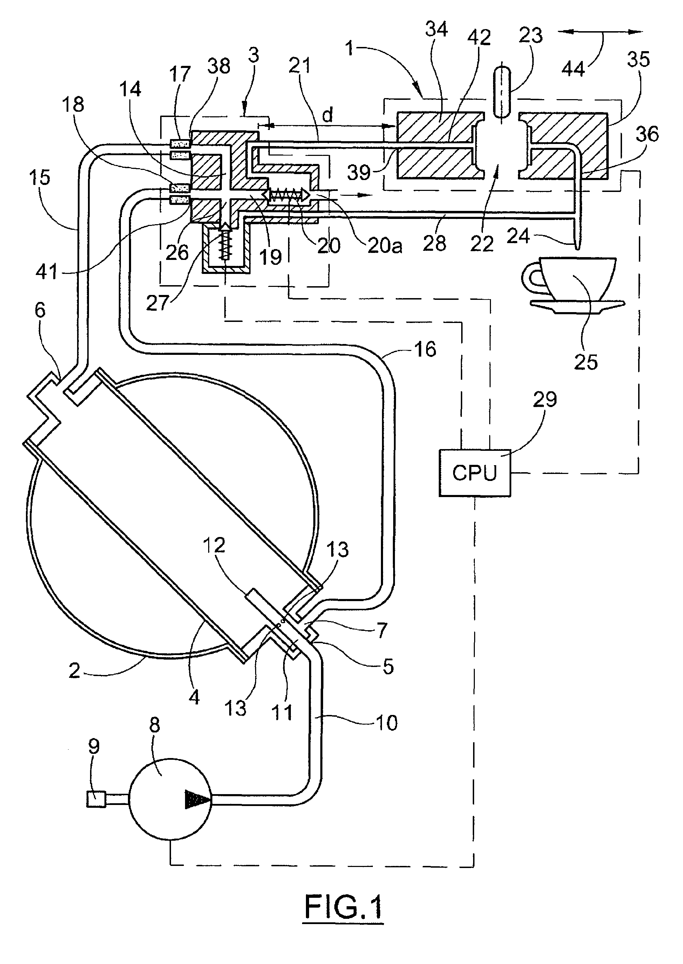

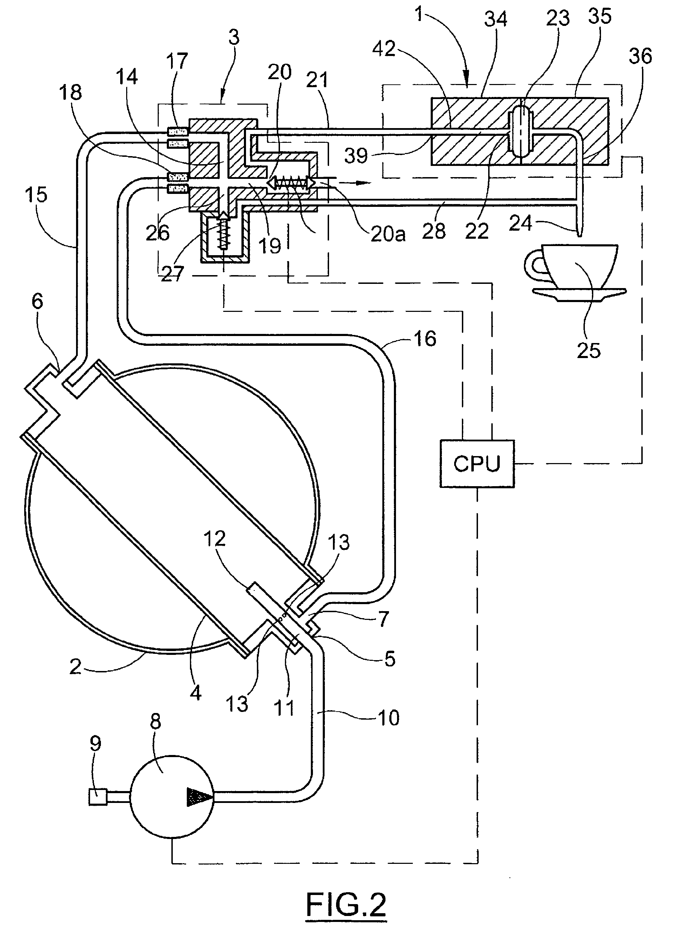

Figures 1 and 2 schematically illustrate a coffee apparatus comprising a pod (or capsule) brewing unit 1 being collectively indicated with a dashed line and a distribution unit 3, also indicated as a whole with a dashed line. The brewing unit 1 interfaces with a boiler 2 of the saturated steam type by means of the distribution unit 3. The structure of the pod brewing unit 1 can be of conventional type, such as of the type disclosed for instance in patent application No. EP 1146807. In particular, the brewing unit 1 comprises a first and second brewing chamber sections 34 and 35 being movable relative to one another, between an open position for receiving a pod 23 and a closed position for brewing the coffee contained in the pod. In the open position, the brewing chamber sections 34 and 35 are spaced apart and define a brewing chamber 22 there-between. The relative movement of the first and second sections 34 and 35 open and close the brewing chamber 22. In Fig. 1, the brewing chamber sections 34 and 35 are shown in the open position, whereas in Fig. 2 the sections are illustrated in the closed position. For example, second chamber section 35 can be moved back and forth along a direction substantially perpendicular to the direction of insertion of the pod between the sections, the direction of movement being indicated in Fig. 1 with double arrow 44. Mechanical movements of the sections can be achieved in a conventional manner and details are not shown in the figures.

The brewing unit 1 interfaces with a heat exchanger 4 which is disposed in the boiler 2 in a conventional manner and is provided with a first cold water inlet opening 5, a second hot water supply opening 6 and a third opening 7 in the vicinity of the first opening 5.

A cold water supply pump 8 is connected between a conventional water source 9 and the first opening 5 of the heat exchanger 4 by means of a cold water duct 10, whose portion 11, which is arranged within the heat exchanger 4, has an end opening 12 and comprises a plurality of transverse holes 13 opening into the heat exchanger in the vicinity of the third opening 7. The transverse holes 13, for example of diameter of approximately 1 mm, are provided to feed cold water into the heat exchanger 4 together with the opening 12 of the portion 11. For example, the plurality of holes 13 can be arranged circumferentially in a row around the portion 11 of the duct 10.

The distribution unit 3 internally comprises a thermally regulated chamber 14 which is stably connected with the heat exchanger 4 via a hot water duct 15 connecting the second hot water supply opening 6 with a first circulation inlet 38 provided in the distribution unit 3 and via a return duct 16 connecting a circulation outlet 41 to the third opening 7 of the heat exchanger 4. A water loop is then formed by the heat exchanger 4, the hot water duct 15 and the return duct 16. The loop allows water to circulate in and out the distribution unit 3 by the thermo-siphon effect.

In particular, a calibrated thermo-siphon circulation of the water from the heat exchanger 4 is established by means of the ducts 15 and 16 and the chamber 14 with the result that the distribution unit 3 and the members connected thereto are kept at the ideal and desired temperature even during pauses between one brewing operation and the next.

For example, the distribution unit 3 is kept warm by means of the circulation of water in the thermally regulated chamber 14 having a temperature of 84°C.

The brewing unit 1 is spaced apart from the distribution unit 3 by a given distance, d, and the two units are in fluid communication by means of a connection duct 21 that connects a first outlet 19 of the distribution unit to an inlet 39 of brewing chamber section 34. The distance d can for example range from 10 to 30 cm.

The distance between the distribution unit and the brewing unit may substantially correspond to the length of the connection duct or the length of the connection duct may exceed the distance between the two units. For example, the connection duct is a flexible tube which is bowed so that it curves along the distance between the two units.

In an embodiment, a gap exists between the distribution unit and the separate brewing unit and the brewing unit is thermally coupled to the distribution unit only through the connection duct that brings the hot water for the coffee preparation. This implies that the brewing unit, and in particular the first and second brewing chamber sections, can be cooled down to a temperature that is significantly lower than the temperature of the distribution unit, during operation of the coffee apparatus. Nevertheless, brewing of the coffee pods or capsules can take place at a suitable temperature thanks to the relatively high temperature of the water fed from the thermally regulated distribution unit through the connection duct.

The distribution unit 3 communicates by means of a valve 20 with the connection duct 21, which discharges into a brewing duct 42 comprised within the first brewing chamber section 34, the brewing duct 42 feeding the hot water of the connection duct to the brewing chamber 22 which, when open, as shown in Fig. 1, is ready to receive a pod or a capsule 23.

The second brewing chamber section 35 is provided with a discharge duct 36 leading to a discharge spout 24, the discharge duct 36 leaving the brewing chamber 22 for the supply of the beverage while it is being prepared and is directed towards a collection cup 25.

The hot water duct 15 and the return duct 16 are provided with respective section calibration members 17 and 18 which may in particular be of adjustable type.

These calibration members 17 and 18 make it possible to regulate the flows of water passing through the ducts 15 and 16 and thus to regulate the temperature of the water in the chamber 14 when a beverage is being prepared.

The distribution unit 3 is further provided with a second outlet 26 which is connected by means of a valve 27 to a dilution duct 28 which leads directly to the discharge spout 24 for the beverage being prepared. When this valve 27 is controlled to open the outlet 26, as shown in Fig. 1, hot water at the same temperature as the water in the chamber 14 may therefore be supplied directly to a cup 25 so that the beverage can be diluted with water at the same temperature as the water used to prepare the beverage.

The opening and closing of the valves 20 and 27 and the actuation of the pump 8 are controlled by a conventional control unit 29 of electronic type, in accordance with the program installed in the machine.

The opening and closing of the brewing chamber 22 of the brewing unit 1 may also be controlled by the same control unit 29.

The first brewing chamber section 34, and thus the brewing unit 1, receives the hot water from the distribution unit through the inlet 39 that is coupled to the connection duct 21. Preferably, the connection duct is made of flexible material. In some embodiments, the connection duct has a length of from 100 to 350 mm.

In order to reduce thermal dispersion along the connection duct, in some embodiments, the connection duct is made of a material with relatively low thermal conductivity. In an embodiment, the connection duct is a braided silicone tube, wherein multifilament yarns are co-extruded with a silicone elastomer to form a braid structure. The braiding enables the conduction duct to withstand a water pressure of 8-10 bar, necessary for coffee brewing.

For example, the connection duct has a circular cross section of 3 mm of internal diameter, 6 mm of external diameter, has a length of about 150 mm and a thermal conductivity of from 0.22 to 0.44 W/m-°C. Thermal dissipation of the hot water passing through such a connection duct was estimated to be of less than 1°C.

It is however to be understood that the present invention encompasses a connection duct made of other materials, such as copper or stainless steel.

The distribution and brewing units can be arranged within the coffee apparatus at different relative positions, for example at approximately the same height. It is emphasised that provision of two separate units improves a degree of freedom in the design of the apparatus. For example, the brewing unit can be arranged in such a way that positioning of the discharge spouts results ergonomically favourable.

With reference to Fig. 2, it can be seen that, after a pod or capsule 23 has been inserted in the chamber 22 of the brewing device 1, the closed chamber 22 is supplied with a dose of water at the required temperature by the distribution unit 3, under the action of the pump 8 and following the opening of the outlet 19 by the valve 20. The latter, when it keeps the first outlet 19 of the distribution unit 3 open, closes the respective discharge 20a which is normally open when the outlet 19 is being kept closed.

The discharge 20a makes it possible to discharge the residual pressure from the brewing chamber 22 when a beverage has been supplied.

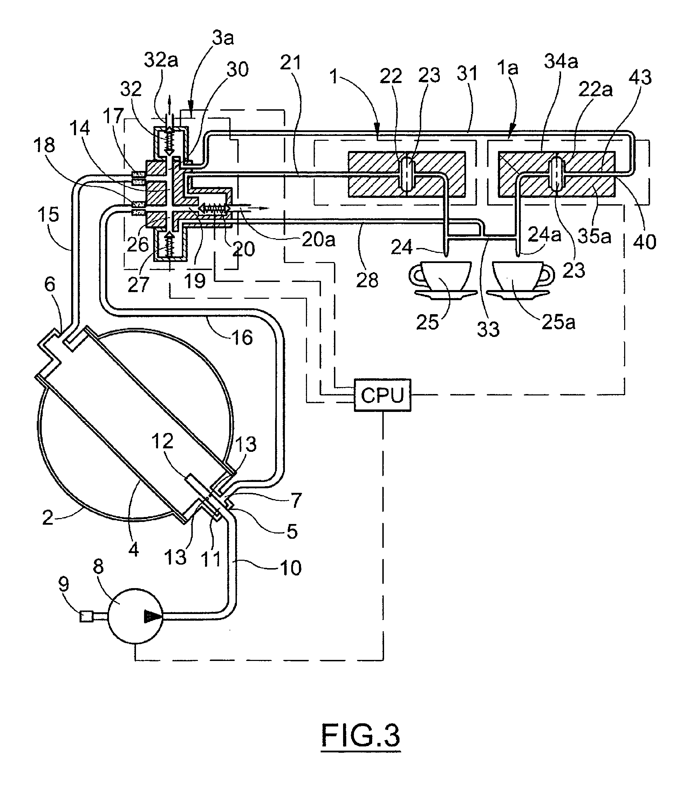

In the embodiment shown in Fig. 3, a distribution unit 3a is provided with a third outlet 30, which is brought into communication with a second connection duct 31 by means of a valve 32 with a relative discharge 32a.

The connection duct 31 can be equivalent to the connection duct 21 (e.g., made of the same material) of the embodiment of Fig. 1. For example, each connection duct 21 and 31 is a braided silicone tube. Connection duct 31 is adapted to supply the hot water to a second brewing unit 1a with a brewing chamber 22a which may be opened and closed and with a discharge duct 43 leading to a discharge spout 24a to a second cup 25a. The second brewing unit 1 a comprises a first brewing chamber section 34a and a second brewing chamber 35a being movable relatively one to another. The second brewing unit 1a is in fluid communication with the distribution unit 3a by means of the second connection duct 31, which introduces the hot water in the second brewing unit 1 a through inlet 40.

In the embodiment shown in Fig. 3, the duct 28 from the second opening 26 of the distribution unit 3a is connected to a duct 33 connecting the discharge spouts 24 and 24a.

With the apparatus according to the invention as described above, the distribution unit 3a may be disposed in the coffee machine in the vicinity of the brewing devices 1 and 1a without detracting from their ease of use in terms of the insertion and removal of the pods and capsules and, at the same time, the water may be supplied to the brewing units 1 and 1a at the optimum temperature.

Moreover, with the apparatus according to the invention, it is possible to adapt the brewing temperature to the type of coffee desired. When the water circuit is in brewing mode, as shown in Fig. 2, the cold water supplied by the pump 8 to the exchanger 4 through the end opening 12 is partly discharged from the holes 13 and is mixed with the water of the region in the proximity of the third opening 7 of the heat exchanger.

This mixture, whose temperature depends on the transverse dimensions of the holes 13, is urged towards the thermally regulated chamber 14 of the distribution unit via the return duct 16 and the calibrated connection 18. A further flow of water reaches the chamber 14 from the hot water opening 6 of the heat exchanger 4 via the hot water duct 15 and the calibrator 17.

The two flows of water described above are mixed in the chamber 14 and it is the water from this mixing process which is supplied to the brewing chamber 22 or 22a when the outlet 19 or the outlet 30 or both are opened by means of the valves 20 and 32.

Moreover, by acting on the ratio between the sections of the calibrators 17 and 18 it is also possible to determine the brewing temperature depending on the type of coffee which it is wished to supply.

As a result, the device provides an extended possibility of regulating the temperature of the hot water.

For instance, for a coffee of Mediterranean type in small quantities the temperature of the water will be set to a higher value than that required for the preparation of a coffee with milk in longer quantities characteristic of the northern European regions.

It will be appreciated that the invention is not limited solely to the embodiments described above, but also includes other embodiments coming within the scope of the invention as claimed hereafter.

## Claims

1. An apparatus for the preparation of coffee-based beverages comprising:
at least one brewing unit (1) operating with pre-packaged pods or capsules containing one or more doses of ground coffee for the preparation of coffee-based beverages, said at least one brewing unit comprising a first and a second brewing chamber sections (34,35) being movable relatively one to another so as to close and
open a brewing chamber (22) formed there-between and being apt to house a pod or
a capsule (23), one of the chamber sections (34) comprising a first inlet (39) leading to the brewing chamber, said brewing unit further comprising a first discharge duct (36) from the brewing chamber (22) for supplying the prepared beverage, and
a water heating device (4) with a first opening (5) for the introduction of cold water,
a second opening (6) for supplying heated water,
the apparatus further comprising a water distribution unit (3) being connected to the second opening (6) of the water heating device through a hot water duct (15), wherein the water heating device is provided with a third opening (7) being connected to a return duct (16), and wherein the water distribution unit is provided internally with a thermally regulated chamber (14) connected to the hot water duct (15) and to the return duct (16) so as to create a water circulation of thermo-siphon type, wherein the thermally regulated chamber (14) is provided with a first outlet (19) in fluid communication with the brewing chamber (22) and a first valve (20) is provided in the water distribution unit for opening and closing the first outlet (19) **characterised in that** the water distribution unit (3) is spaced apart from the at least one brewing unit.

2. The apparatus according to claim 1, wherein the thermally regulated chamber (14) is in fluid communication with the first outlet (19) of the distribution unit through a connection duct (21).

3. The apparatus according to claim 1, wherein each of the hot water and return ducts (15, 16) connecting the thermally regulated chamber of the water distribution unit with the heating device is provided with a member (17, 18) for calibrating its cross-section.

4. The apparatus according to claim 3, wherein the calibration members (17, 18) may be adjusted.

5. The apparatus according to claim 3, wherein the calibration members (17, 18) provided on the respective hot water duct and return duct are mounted on the distribution unit (3).

6. The apparatus according to any one of the preceding claims, wherein the thermally regulated chamber (14) comprises a second outlet (26) connected to the first discharge duct (36) supplying the beverage from the at least one brewing unit (1) with the interposition of a second valve (27) for opening and closing the second outlet (26).

7. The apparatus according to anyone of the preceding claims, further comprising a second brewing unit (1a) including a second brewing chamber (22a), wherein the thermally regulated chamber (14) of the water distribution unit (3a) is provided with a third outlet (30) connected to the second brewing chamber (22a) which may be opened and closed with the interposition of a third valve (32) for opening and closing the third outlet (30).

8. The apparatus according to claim 7, wherein each of the first (20) and third (32) valves is provided with a respective discharge (20a, 32a) to atmosphere when it is positioned to close the respective outlet of the water distribution unit.

9. The apparatus according to anyone of the preceding claims, wherein a cold water duct (10) comprises an end portion (11) extending from the first opening (5) for the introduction of cold water into the heating device (4), the cold water duct being connected to a cold water supply pump (8) and the end portion (11) being positioned within the water heating device (4) in the vicinity of the third opening (7).

10. The apparatus according to claim 9, wherein the end portion (11) within the water heating device (4) comprises a plurality of transverse holes (13) opening into the heating device.

11. The apparatus of claim 1, wherein the third opening (7) is arranged in the vicinity of the first opening (5) of the water heating device (4).

## Patentansprüche

1. Vorrichtung zur Zubereitung kaffeebasierter Getränke, die aufweist:
wenigstens eine Brüheinheit (1), die mit abgepackten Pads oder Kapseln mit einer Portion oder mehreren Portionen gemahlenen Kaffees zur Zubereitung von kaffeebasierten Getränken betrieben wird, wobei die wenigstens eine Brüheinheit einen ersten und einen zweiten Brühkammernabschnitt (34, 35) enthält, die in Bezug zueinander bewegbar sind, um so eine dazwischen ausgebildete Brühkammer (22) zu öffnen und zu schließen und um ein Pad oder eine Kapsel (23) aufnehmen zu können, wobei einer der Kammernabschnitte (34) einen ersten Einlass (39) aufweist, der zur Brühkammer führt, wobei die Brüheinheit weiterhin eine erste Ausgabeleitung (36) aus der Brühkammer (22) aufweist, um das zubereitete Getränk auszugeben, und
eine Wassererhitzungseinrichtung (4) mit einer ersten Öffnung (5) zum Einleiten von kaltem Wasser und einer zweiten Öffnung (6) zur Ausgabe erhitzten Wassers, wobei die Vorrichtung weiterhin eine Wasserverteilungseinheit (3) aufweist, die mit der zweiten Öffnung (6) der Wassererhitzungseinrichtung über eine Heißwasserleitung (15) verbunden ist,
wobei die Wassererhitzungseinrichtung mit einer dritten Öffnung (7) ausgestattet ist, die mit einer Rückleitung (16) verbunden ist, und wobei die Wasserverteilungseinheit intern mit einer wärmeregulierten Kammer (14) vorgesehen ist, die mit der Heißwasserleitung (15) und der Rückleitung (16) verbunden ist, um eine Wasserzirkulation des Thermosiphontyps zu bilden,
wobei die wärmeregulierte Kammer (14) mit einem ersten Auslass (19) in Fluidverbindung mit der Brühkammer (22) vorgesehen ist, und ein erstes Ventil (20) in der Wasserverteilungseinheit zum Öffnen und Schließen des ersten Auslasses (19) vorgesehen ist,
**dadurch gekennzeichnet, dass** die Wasserverteilungseinheit (3) von der wenigstens einen Brüheinheit beabstandet ist.

2. Vorrichtung gemäß Anspruch 1, wobei die wärmeregulierte Kammer (14) über eine Verbindungsleitung (21) in Fluidverbindung mit dem ersten Auslass (19) der Verteilungseinheit steht.

3. Vorrichtung gemäß Anspruch 1, wobei jede Leitung von Heißwasser- und Rückleitung (15, 16), die die wärmeregulierte Kammer der Wasserverteilungseinheit mit der Erhitzungsvorrichtung verbinden, mit einem Element (17, 18) zur Kalibrierung des Querschnitts davon vorgesehen ist.

4. Vorrichtung gemäß Anspruch 3, wobei die Kalibrierungselemente (17, 18) angepasst werden können.

5. Vorrichtung gemäß Anspruch 3, wobei die Kalibrierungselemente (17, 18), die auf der entsprechenden Warmwasserleitung und Rückleitung vorgesehen sind, auf der Verteilungseinheit (3) angebracht sind.

6. Vorrichtung gemäß einem der vorhergehenden Ansprüche, wobei die wärmeregulierte Kammer (14) einen zweiten Auslass (26) umfasst, der mit der ersten Ausgabeleitung (36) verbunden ist, wobei das Getränk aus der mindestens einen Brüheinheit (1) über Zwischenschaltung eines zweiten Ventils (27) zum Öffnen und Schließen des zweiten Auslasses (26) ausgegeben wird.

7. Vorrichtung gemäß einem der vorhergehenden Ansprüche, die weiterhin aufweist ein zweite Brüheinheit (1a) mit einer zweiten Brühkammer (22a), wobei die wärmeregulierte Kammer (14) der Wasserverteilungseinheit (3a) mit einem dritten Auslass (30) ausgebildet ist, der mit der zweiten Brühkammer (22a) verbunden ist, die durch die Zwischenschaltung eines dritten Ventils (32) zum Öffnen und Schließen des dritten Auslasses (30) geöffnet und geschlossen werden kann.

8. Vorrichtung gemäß Anspruch 7, wobei jedes von erstem (20) und drittem (32) Ventil einen zugehörigen Auslass (20a, 32a) in die Atmosphäre aufweist, wenn es sich in der Position befindet, in dem der zugehörige Auslass der Wasserverteilungseinheit geschlossen ist.

9. Vorrichtung gemäß einem der vorhergehenden Ansprüche, wobei eine Kaltwasserleitung (10) ein Endstück (11) aufweist, das sich von der ersten Öffnung (5) in die Erhitzungsvorrichtung (4) zum Einleiten von kaltem Wasser erstreckt, wobei die Kaltwasserleitung mit einer Kaltwasserzuführungspumpe (8) verbunden ist und das Endstück (11) in der Wassererhitzungseinrichtung (4) in der Nähe der dritten Öffnung (7) angeordnet ist.

10. Vorrichtung gemäß Anspruch 9, wobei das Endstück (11) in der Wassererhitzungseinrichtung (4) eine Vielzahl von quer verlaufenden Öffnungen (13) aufweist, die sich in die Erhitzungsvorrichtung öffnen.

11. Vorrichtung gemäß Anspruch 1, wobei die dritte Öffnung (7) in der Nähe der ersten Öffnung (5) der Wassererhitzungseinrichtung (4) angeordnet ist.

## Revendications

1. Appareil pour la préparation de boissons à base de café, comprenant :
au moins une unité d'infusion (1) fonctionnant avec des dosettes ou capsules préemballées contenant une ou plusieurs doses de café moulu pour la préparation de boissons à base de café, ladite au moins une unité d'infusion comprenant une première et une deuxième section de chambre d'infusion (34, 35) qui sont mobiles l'une par rapport à l'autre afin de fermer et d'ouvrir une chambre d'infusion (22) formée entre elles et pouvant loger une dosette ou une capsule (23), l'une des sections de chambre (34) comprenant une première entrée (39) menant à la chambre d'infusion, ladite unité d'infusion comprenant en outre un premier conduit de décharge (36) à partir de la chambre d'infusion (22) pour fournir la boisson préparée, et
un dispositif de chauffage d'eau (4) avec une première ouverture (5) pour l'introduction de l'eau froide, une deuxième ouverture (6) pour fournir l'eau chaude,
l'appareil comprenant en outre une unité de distribution d'eau (3) qui est raccordée à la deuxième ouverture (6) du dispositif de chauffage d'eau par le biais d'un conduit d'eau chaude (15), dans lequel le dispositif de chauffage d'eau est prévu avec une troisième ouverture (7) qui est raccordée à un conduit de retour (16), et dans lequel l'unité de distribution d'eau est prévue intérieurement avec une chambre thermiquement régulée (14) raccordée au conduit d'eau chaude (15) et au conduit de retour (16) afin de créer une circulation d'eau du type thermosiphon, dans lequel la chambre thermiquement régulée (14) est dotée d'une première sortie (19) en communication de fluide avec la chambre d'infusion (22) et une première soupape (20) est prévue dans l'unité de distribution d'eau pour ouvrir et fermer la première sortie (19), **caractérisé en ce que** l'unité de distribution d'eau (3) est espacée d'au moins une unité d'infusion.

2. Appareil selon la revendication 1, dans lequel la chambre thermiquement régulée (14) est en communication de fluide avec la première sortie (19) de l'unité de distribution par le biais d'un conduit de raccordement (21).

3. Appareil selon la revendication 1, dans lequel chacun des conduits d'eau chaude et de retour (15, 16) raccordant la chambre thermiquement régulée de l'unité de distribution d'eau avec le dispositif de chauffage, est prévu avec un élément (17, 18) pour calibrer sa section transversale.

4. Appareil selon la revendication 3, dans lequel les éléments de calibrage (17, 18) peuvent être ajustés.

5. Appareil selon la revendication 3, dans lequel les éléments de calibrage (17, 18) prévus sur le conduit d'eau chaude et le conduit de retour respectifs, sont montés sur l'unité de distribution (3).

6. Appareil selon l'une quelconque des revendications précédentes, dans lequel la chambre thermiquement régulée (14) comprend une deuxième sortie (26) raccordée au premier conduit de décharge (36) alimentant la boisson à partir de la au moins une unité d'infusion (1) avec l'interposition d'une deuxième soupape (27) pour ouvrir et fermer la deuxième sortie (26).

7. Appareil selon l'une quelconque des revendications précédentes, comprenant en outre une deuxième unité d'infusion (1a) comprenant une deuxième chambre d'infusion (22a), dans lequel la chambre thermiquement régulée (14) de l'unité de distribution d'eau (3a) est prévue avec une troisième sortie (30) raccordée à la deuxième chambre d'infusion (22a) qui peut être ouverte et fermée avec l'interposition d'une troisième soupape (32) pour ouvrir et fermer la troisième sortie (30).

8. Appareil selon la revendication 7, dans lequel chacune des première (20) et troisième (32) soupapes est prévue avec une décharge (20a, 32a) respective à l'atmosphère qui est positionnée pour fermer la sortie respective de l'unité de distribution d'eau.

9. Appareil selon l'une quelconque des revendications précédentes, dans lequel un conduit d'eau froide (10) comprend une partie d'extrémité (11) s'étendant à partir de la première ouverture (5) pour l'introduction de l'eau froide dans le dispositif de chauffage (4), le conduit d'eau froide étant raccordé à une pompe d'alimentation d'eau froide (8) et la partie d'extrémité (11) étant positionnée à l'intérieur du dispositif de chauffage d'eau (4) à proximité de la troisième ouverture (7).

10. Appareil selon la revendication 9, dans lequel la partie d'extrémité (11) à l'intérieur du dispositif de chauffage d'eau (4) comprend une pluralité de trous transversaux (13) débouchant dans le dispositif de chauffage.

11. Appareil selon la revendication 1, dans lequel la troisième ouverture (7) est agencée à proximité de la première ouverture (5) du dispositif de chauffage d'eau (4).
